# DEMANDE DE BREVET EUROPEEN

(11) **EP 1 657 109 A1**
(43) Date de publication de la demande: **17.05.2006**
(21) Numéro de dépôt: 05300791.0
(22) Date de dépôt: 05.10.2005
(51) Int. Cl.: B60P 3/22, B62D 25/20, B62D 29/04

(54) **Véhicule utilitaire transporteur de fluide**

(30) Priorité: 10.11.2004 FR 0452588
(71) Demandeur: Ducarme SA, 42350 La Talaudière (FR)
(72) Inventeur: Angin, Alain, 42290 Sorbiers (FR)
(74) Mandataire: Dupuis, François

(57) **Abrégé**

Le véhicule utilitaire transporteur de fluides tels que de l'eau est remarquable en ce qu'il comprend à partir de son châssis (1), un plancher autoporteur (2) en un matériau composite monobloc intégrant dans tout ou partie de son volume une partie formant cuve réceptrice d'un volume de fluide tel que l'cau, ledit plancher étant agencé pour recevoir dans sa partie supérieure des aménagements techniques pour la réception de matériels, produits, selon les applications du véhicule, et en ce que ledit plancher autoporteur est réalisé en un matériau composite multicouches avec des épaisseurs variables selon les zones de sollicitation.

## Description

L'invention se rattache au secteur technique des véhicules utilitaires conçus et aménagés pour transporter un fluide, tel que de l'eau, à des fins de lutte contre le feu, de nettoyage des lieux publics, mais aussi pour toutes autres utilisations publiques ou privées, avec une eau naturelle ou souillée.

Ces véhicules sont adaptés à des fonctions particulières pour répondre à des besoins différenciés exigeant le transport de volumes de fluides tels que de l'eau très variables. Par exemple, concernant la gamme des véhicules pompiers, on distingue des véhicules avec des citernes d'eau susceptibles de stocker des volumes d'eau de plusieurs tonnes, de certains autres véhicules dits de premier secours destinés à intervenir sur les feux de faible étendue et en intervention rapide.

La réflexion du Demandeur a donc été attirée sur certaines contraintes inhérentes à ce type de véhicules dits de premier secours, et a été ensuite étendue aux véhicules utilitaires légers pouvant rencontrer les mêmes contraintes.

Dans le cas particulier des véhicules pompiers, un problème important réside dans la formation des conducteurs. En effet, par rapport aux normes en vigueur, la conduite de véhicules ayant un poids total en charge (PTAC) supérieur à 3,5 tonnes exige l'obtention d'un permis de conduire B. Depuis l'arrêt en France du service national militaire, qui était propice à l'enseignement de la conduite de véhicules lourds, il apparaît qu'il y a un manque crucial de personnes ayant la capacité de conduire des véhicules relevant de cette catégorie B. Or, les investissements et formations sont trop coûteux et les pouvoirs publics y ont renoncé. On en arrive à ce que certains véhicules de premier secours actuellement utilisés sont en surcharge au dessus des 3,5 tonnes déclarées et réglementées. On appréhende ainsi facilement les risques et conséquences en cas d'accidents, et donc de responsabilités.

La conséquence de cette situation est qu'à terme et pour être en conformité avec les règles et normalisations en vigueur, les véhicules dits de premier secours seront progressivement abandonnés au profit de gros véhicules de plus de 5 tonnes plus onéreux et en quantité moindre, selon les budgets des collectivités territoriales et organismes publics ou privés les utilisant. En outre, cela ne répond absolument pas au problème de la conduite et du recrutement de conducteurs aptes à conduire ces véhicules. Cette situation est donc paradoxale, car la gestion d'un parc de véhicules de plus de 5 tonnes est plus lourde à gérer, plus coûteuse, plus limitative dans ses conditions d'intervention, et évidemment va à l'encontre d'objectifs de mobilité, de disponibilité et de la multiplication de petites unités autonomes répondant à des besoins immédiats.

Le problème crucial est donc celui de la maîtrise du poids total en charge du véhicule et de sa charge utile, et ce par rapport à la zone limite des 3,5 tonnes. Si l'on considère que l'utilisation première des véhicules de premier secours nécessite une charge utile déterminée en eau notamment pour répondre aux besoins et aux objectifs donnés à ces véhicules, sans procéder à une limitation de leurs conditions d'intervention, on en déduit que les recherches d'allègement ne peuvent être envisagées que sur les véhicules proprement dits.

D'une manière plus générale, les constatations faites par le Demandeur se retrouvent sur d'autres véhicules utilitaires légers qui sont utilisés par des collectivités territoriales ou organismes privés ou publics liés à l'environnement, l'entretien des lieux publics par exemple.

En outre, le Demandeur a constaté que les véhicules utilitaires légers en fonction de leurs destinations et applications étaient conçus sans tenir compte d'une quelconque recherche de rationalisation des composants et structures, de sorte qu'il n'y avait pas sur ces points de possibilité de réduction de coûts.

Le Demandeur a donc réfléchi à un nouvel aménagement et construction de véhicules utilitaires transporteur de fluides et notamment d'eau répondant à différents critères, à savoir :
- allègement du véhicule à vide ;
- rationalisation de certains composants permettant une adaptation d'une même structure de base pour permettre une modularité d'utilisation de composants en fonction des applications ;
- préparation de l'équipement indépendamment de la présence du véhicule receveur.

La solution trouvée par le Demandeur répond ainsi à tous ces objectifs et au problème posé, en permettant de concevoir des véhicules utilitaires qui répondent aux différents besoins en supprimant les contraintes.

Selon une première caractéristique de l'invention, le véhicule utilitaire léger est remarquable en ce qu'il comprend à partir de son châssis, un plancher autoporteur monobloc intégrant dans tout ou partie de son volume une partie formant cuve réceptrice d'un volume de fluide tel que d'eau, ledit plancher étant agencé pour recevoir dans sa partie supérieure des aménagements techniques pour la réception de matériels, produits, selon les applications du véhicule, et en ce que ledit plancher autoporteur est réalisé en un matériau composite avec des épaisseurs variables selon les zones de sollicitation.

Ces caractéristiques et d'autres encore ressortiront bien de la suite de la description.

Pour fixer l'objet de l'invention illustrée d'une manière non limitative aux figures des dessins où :

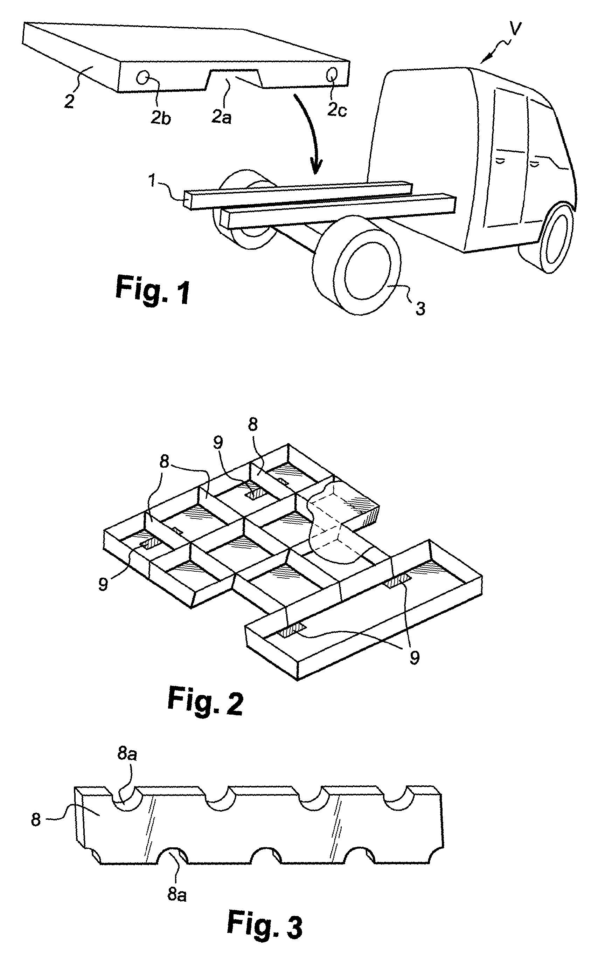

- la figure 1 est une vue en perspective schématique d'un véhicule utilitaire léger incluant à partir de son châssis le plancher autoporteur selon l'invention.
- la figure 2 est une vue à caractère schématique illustrant le plancher autoporteur avec en particulier les zones de fixation au châssis du véhicule.
- la figure 3 est une vue à caractère schématique en coupe illustrant un raidisseur dans l'aménagement intérieur du plancher autoporteur.
- la figure 4 est une vue d'un exemple d'application de l'invention à un véhicule utilitaire de premier secours avec l'adjonction de modules de rangement d'appareils, produits inhérents à l'application concernée.
- la figure 5 est une vue en coupe illustrant le dispositif de fixation du plancher sur le châssis.
- la figure 6 est une vue à caractère schématique illustrant en coupe la paroi multicouches du plancher autoporteur.

Afin de rendre plus concret l'objet de l'invention, on le décrit maintenant d'une manière non limitative illustrée aux figures des dessins.

Le véhicule utilitaire est référencé par (V) et comprend un châssis (1) avec un ou plusieurs essieux ou double essieux. Le châssis (1) est établi de toute manière connue.

Selon l'invention, le châssis (1) est susceptible d'autoriser le positionnement et la fixation, en lieu et place du faux châssis traditionnel, d'un plancher autoporteur (2) formant caisson et établi selon les dimensions d'empattement du véhicule, avec au moins un décrochement (2a) à l'endroit du passage d'au moins un ensemble de roues (3).

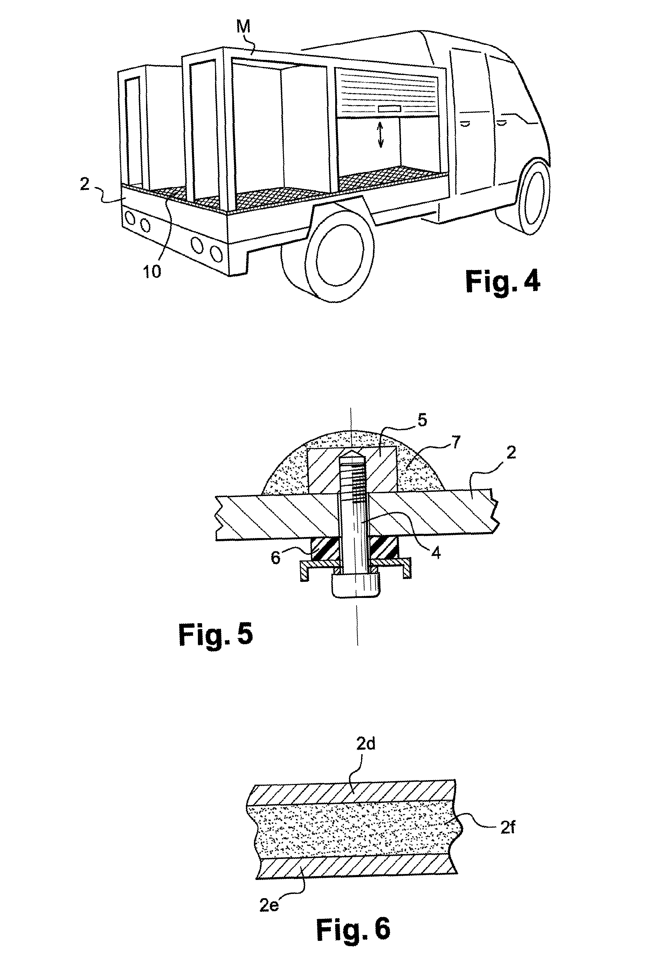

Ce plancher autoporteur (2) forme caisson et est agencé dans tout ou partie de son volume pour constituer un réservoir d'eau ou autre fluide. Ledit plancher autoporteur est ainsi agencé avec une prise (2b) de canalisation pour le remplissage et une prise de vidange (2c). La fixation du plancher autoporteur sur le châssis du véhicule ou corbeau du châssis s'effectue à l'aide de tout système de liaison démontable. On a représenté de manière non limitative figure 5 un exemple de liaison avec un assemblage par vis (4), insert (5), silent-bloc (6) et coupelle de protection (7). La fixation s'effectue en une multitude de points qui peuvent varier en nombre et en disposition selon la configuration du châssis du véhicule. La face plane inférieure du plancher est néanmoins agencée avec des zones de renfort aux endroits supposés de fixation.

Par ailleurs, le plancher autoporteur est réalisé en un matériau composite monobloc obtenu par moulage et constitue un tout unitaire indéformable. La longueur dudit plancher est variable selon les véhicules récepteurs, mais aussi ses autres dimensions. Le plancher autoporteur est agencé intérieurement dans tout ou partie du volume intérieur avec des moyens raidisseurs (8) disposés selon un quadrillage spécifique. Ces moyens raidisseurs sont établis selon des profilés disposés de manière spécifique en définissant des chicanes pour le passage du fluide et assurant une fonction anti-vagues et/ou anti-balourds. Ces moyens raidisseurs ont des ouvertures (8a) de communication et de passage du fluide. Le volume intérieur du plancher autoporteur selon l'invention peut être de l'ordre de 600 à 700 litres d'eau, soit largement supérieur au volume de 450 litres couramment admis sur les véhicules premier secours actuels pour les pompiers.

Selon une autre caractéristique, le plancher autoporteur peut selon les applications assurer dans tout son volume la fonction cuve de stockage de fluide tel que l'eau, mais il peut aussi être compartimenté avec d'autres volumes pour la réception de produits autres que le fluide (eau) en question, en pouvant avoir un intérêt pratique pour l'application concernée.

Ce plancher autoporteur étant moulé en matériau composite, on comprend que son aménagement intérieur peut être facilement adapté aux besoins de l'application.

Selon une disposition importante de l'invention, le plancher autoporteur est agencé avec des parois constituées en multicouches avec, en particulier, au moins deux couches apparentes, externe et interne (2d - 2e), et une couche intermédiaire (2f). Celle-ci est constituée par l'utilisation d'un matériau de rigidification du type résine à expansion rapide, et contribuant à la solidité de l'ensemble. Plus particulièrement, la résine utilisée est celle connue dans le commerce sous la marque « FSP » de EURORESINES.

Par ailleurs, des inserts (9) de rigidification sont noyés lors de la fabrication du plancher autoporteur aux endroits où les sollicitations sont les plus fortes.

La structure multicouches du plancher autoporteur est ainsi adaptée pour tenir compte des contraintes et sollicitations du véhicule, et ainsi de la charge qu'il sera susceptible de recevoir sur sa partie supérieure. Le nombre de couches peut varier en fonction des sollicitations.

Selon une autre disposition de l'invention, la partie supérieure du plancher autoporteur est aménagée pour recevoir un caillebotis (10) ou revêtement métallique sur tout ou partie de sa surface pour autoriser le passage d'utilisateurs du véhicule.

Selon une autre disposition de l'invention, le plancher autoporteur autorise le positionnement et la fixation de modules (M), ou d'appareils ou de portiques, ou autres, nécessaires à l'application du véhicule. Ainsi, les modules (M) peuvent constituer des enceintes de protection et de rangement. Ces modules sont aussi réalisés en matériaux composites par moulage d'une manière identique à la fabrication du plancher autoporteur avec des zones renforcées aux endroits de fixation sur ledit plancher. L'accès intérieur à ces modules s'effectue de toute manière appropriée par des portes, des volets escamotables ou autres.

Dans le cadre de l'application à des véhicules premier secours pour pompiers, la partie supérieure du plancher autoporteur peut être équipée et recevoir des portiques pour le support d'échelles, un ou des blocs compresseurs et autres.

En pratique, on comprend que le gros intérêt de l'invention est qu'à partir d'un plancher autoporteur, on peut aménager la partie supérieure avec des modules de rangement, mettre les appareils et instruments nécessaires à l'application. On peut aussi avoir la présence d'un réservoir de collecte de déchets ou autres. Des pompes électriques, haute et basse pression, peuvent équiper ce véhicule ainsi réalisé. Le plancher autoporteur peut ainsi être aménagé avec des formes évidées, et/ou avec des pourtours périphériques et transversaux selon les équipements de modules à recevoir.

L'invention est extrêmement avantageuse et trouve de multiples applications par le biais des collectivités territoriales, mais aussi aux entreprises et organismes privés et publics.

La protection du réservoir d'eau est assurée par la constitution très particulière du plancher autoporteur.

Il est possible d'adapter les véhicules à la demande et aux besoins des clients.

Le centre de gravité du véhicule est abaissé par la suppression du faux châssis. Le seuil de chargement est abaissé.

On note aussi l'augmentation significative de l'ordre de 20 à 30 % du volume d'eau stocké par rapport aux conditions de l'art antérieur.

Un autre avantage réside en ce que le plancher autoporteur de l'invention permet l'obtention de gain en poids de 200 à 300 Kg sur le véhicule à vide, ce qui est considérable, et permet d'affecter ce type de véhicules utilitaires dans la catégorie A du permis de conduire, répondant au problème posé.

Par ailleurs, la fabrication du plancher autoporteur s'effectue d'une manière indépendante en usine avec le ou les modules nécessaires à l'application. On peut donc préparer, de manière indépendante, l'installation à disposer sur le châssis du véhicule de manière à être prête à brider. Ce travail indépendant permet aussi de stocker des planchers autoporteurs et de pouvoir répondre de manière instantanée, en cas de nécessité de remplacement par suite de dommages ou autres. On offre ainsi une adaptabilité sur tous types de châssis de véhicules.

## Revendications

1. Véhicule utilitaire transporteur de fluides tels que de l'eau, **caractérisé en ce qu'**il comprend à partir de son châssis (1), un plancher autoporteur (2) en un matériau composite monobloc intégrant dans tout ou partie de son volume une partie formant cuve réceptrice d'un volume de fluide tel que l'eau, ledit plancher étant agencé pour recevoir dans sa partie supérieure des aménagements techniques pour la réception de matériels, produits, selon les applications du véhicule, et **en ce que** ledit plancher autoporteur est réalisé en un matériau composite multicouches avec des épaisseurs variables selon les zones de sollicitation.

2. Véhicule selon la revendication 1, **caractérisé en ce que** le châssis (1) autorise le positionnement et la fixation d'un plancher autoporteur (2) formant caisson et établi selon les dimensions d'empattement du véhicule, avec au moins un décrochement (2a) à l'endroit du passage d'au moins un ensemble de roues (3), et **en ce que** le plancher autoporteur (2) forme caisson et est agencé dans tout ou partie de son volume pour constituer un réservoir d'eau ou autre fluide, et **en ce que** ledit plancher autoporteur est agencé avec une prise (2b) de canalisation pour le remplissage et une prise de vidange (2c).

3. Véhicule selon la revendication 2, **caractérisé en ce que** la fixation du plancher autoporteur sur le châssis du véhicule ou corbeau du châssis s'effectue à l'aide de tous moyens de liaison démontable, et **en ce que** la face plane inférieure du plancher est agencée avec des zones de renfort (5) aux endroits de fixation.

4. Véhicule selon la revendication 1, **caractérisé en ce que** le plancher autoporteur est agencé intérieurement dans tout ou partie du volume intérieur avec des moyens formant raidisseurs (8), et **en ce que** ces moyens raidisseurs sont établis selon des profilés disposés de manière spécifique en définissant des chicanes pour le passage du fluide et assurant une fonction anti-vagues et/ou anti-balourds, et **en ce que** ces moyens raidisseurs ont des ouvertures (8a) de communication et de passage du fluide.

5. Véhicule selon la revendication 1, **caractérisé en ce que** le plancher autoporteur comprend un volume pour la fonction de stockage de l'eau, et d'autres volumes pour la réception de produits autres que le fluide (eau) en question.

6. Véhicule selon la revendication 1, **caractérisé en ce que** le plancher autoporteur est agencé en matériau composite multicouches avec au moins deux couches apparentes, externe et interne (2d - 2e) et une couche intermédiaire (2f), celle-ci étant constituée par l'utilisation d'un matériau de rigidification du type résine à expansion rapide, et contribuant à la solidité de l'ensemble.

7. Véhicule selon la revendication 6, **caractérisé en ce que** la résine utilisée est celle connue dans le commerce sous la marque « FSP » de EURORESINES.

8. Véhicule selon la revendication 3, **caractérisé en ce que** des inserts (9) de rigidification sont noyés lors de la fabrication du plancher autoporteur aux endroits où les sollicitations sont les plus fortes.

9. Véhicule selon la revendication 1, **caractérisé en ce que** la partie supérieure du plancher autoporteur est aménagée pour recevoir un caillebotis (10) ou revêtement métallique sur tout ou partie de sa surface pour autoriser le passage d'utilisateurs du véhicule.

10. Véhicule selon la revendication 9, **caractérisé en ce que** le plancher autoporteur autorise le positionnement et la fixation de modules (M), ou d'appareils ou de portiques, ou autres, nécessaires à l'application du véhicule.

11. Véhicule selon la revendication 10, **caractérisé en ce que** les modules (M) sont réalisés en matériaux composites par moulage en multicouches d'une manière identique à la fabrication du plancher autoporteur avec des zones renforcées aux endroits de fixation sur ledit plancher.

12. Véhicule selon l'une quelconque des revendications 1 à 10, **caractérisé** dans son application à des véhicules premier secours pour pompiers, et en ce que la partie supérieure du plancher autoporteur est équipée pour recevoir des portiques pour le support d'échelles, un ou des blocs compresseurs et autres.

13. Véhicule selon l'une quelconque des revendications 1 à 10, **caractérisé** dans son application à l'entretien de zones publiques ou privées et de l'environnement, et en ce que la partie supérieure du plancher autoporteur reçoit des modules de rangement, pour mettre les appareils et instruments nécessaires à l'application, et un réservoir de collecte de déchets ou autres.
